# EUROPEAN PATENT APPLICATION

(11) **EP 2 249 589 A1**
(43) Date of publication of application: **10.11.2010**
(21) Application number: 09716034.5
(22) Date of filing: 26.02.2009
(51) Int. Cl.: H04W 4/06, H04W 16/28, H04W 28/04

(54) **BASE STATION, MOBILE STATION, AND MULTICAST/BROADCAST COMMUNICATION METHOD**

(30) Priority: 29.02.2008 JP 2008051088
(71) Applicant: NTT DOCOMO, INC., Chiyoda-ku Tokyo 100-6150 (JP)
(72) Inventor: MORIMOTO, Akihito, Tokyo 100-6150 (JP); SAWAHASHI, Mamoru, Tokyo 100-6150 (JP)
(74) Representative: HOFFMANN EITLE
(86) International application number: PCT/JP2009/053555
(87) International publication number: WO 2009/107717

(57) **Abstract**

A multicast/broadcast communication method between a base station for transmitting first data to plural mobile stations according to multicast or broadcast communications and a mobile station for receiving the first data, includes replicating, by the base station, the first data to generate second data; transmitting, by the base station, the first data and the second data for plural transmission time units; storing, by the mobile station, the first data and the second data; and combining, by the mobile station, the stored first data and the stored second data for the plural transmission time units to generate the first data.

## Description

### TECHNICAL FIELD

The present invention relates to a base station, a mobile station and a multicast/broadcast communication method.

### BACKGROUND ART

Typically, data are transmitted from a base station to a mobile station according to one-to-one unicast communications. On the other hand, when the same data are transmitted to plural mobile stations, one-to-many multicast or broadcast communications can improve usage efficiency of radio resources. The multicast or broadcast communications refer to the technology for simultaneously transmitting the same data to plural mobile stations. More specifically, the multicast communications refer to one-to-specified-group communications and the broadcast communications refer to one-to-unspecified-group communications.

In order to achieve multicast or broadcast communications, a technology called MBMS (Multimedia Broadcast Multicast Service) for delivering multimedia contents according to multicast or broadcast communications is under discussion. The MBMS enables a broadcast messaging service and a high-speed video streaming service. It is expected that the MBMS is implemented in a next-generation mobile communication system such as an E-UTRA (Evolved UMTS Terrestrial Radio Access) system or a fourth-generation system.

The MBMS includes two types of network architectures. One is MBSFN (MBMS with Single

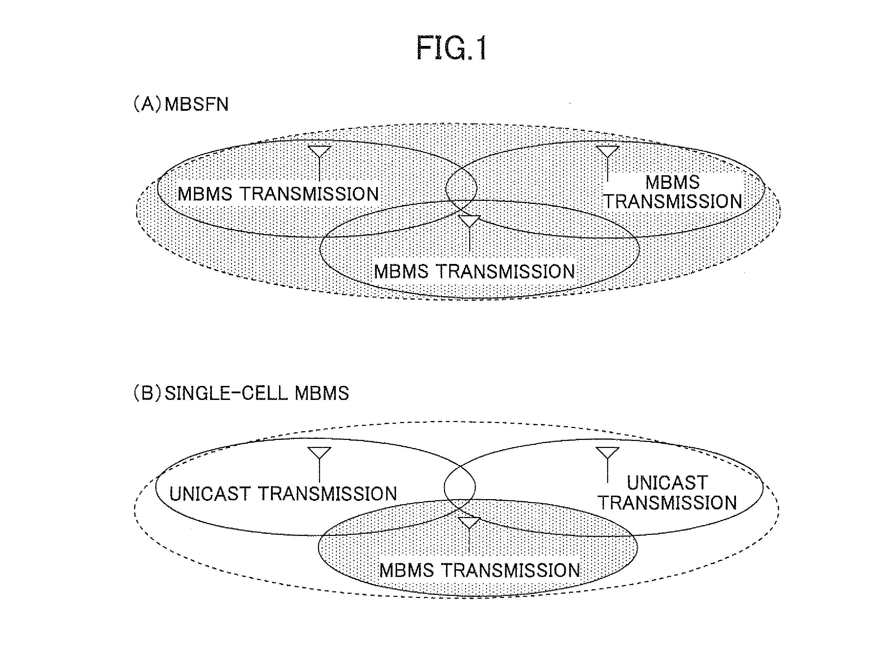

Frequency Network) in which plural base stations maintain synchronization (in cells) and the same MBMS data are transmitted from the plural base stations (in the cells). The other is single-cell MBMS in which a single base station transmits MBMS data (in a cell). Fig. 1 shows these two types of network architectures.

Fig. 1 (A) shows the MBSFN network architecture. According to this architecture, plural base stations maintain synchronization and transmit the same MBMS data. Since plural base stations maintain synchronization and a mobile station can receive almost all of signals from neighbor cells within a guard interval, the signals from the neighbor cells do not cause interference. The mobile station can receive data with high quality by soft-combining signals transmitted from plural base stations.

Fig. 1 (B) shows the single-cell MBMS network architecture. According to this architecture, a base station individually transmits MBMS data. Unicast data or different MBMS data are transmitted in neighbor cells (see 3GPP TR25.346, "Introduction of the Multimedia Broadcast Multicast Service (MBMS) in the Radio Access Network (RAN)").

### DISCLOSURE OF INVENTION

### [PROBLEM(S) TO BE SOLVED BY THE INVENTION]

MBMS data are simultaneously transmitted to plural mobile stations. Thus, the use of a technology which requires feedback information from one mobile station may have an effect on the other mobile stations all together. Accordingly, it is difficult to apply the technology such as AMC (Adaptive Modulation and Channel coding) and Hybrid ARQ (Hybrid Automatic Repeat reQuest) which requires feedback information from individual mobile stations to transmission of MBMS data. In order to achieve reception of MBMS data with high quality, it is necessary to use a technology without feedback information.

It is a general object of the present invention to improve reception quality of multicast or broadcast communication data such as MBMS data without the need for feedback control.

### [MEANS FOR SOLVING THE PROBLEM(S)]

In one aspect of the present invention, there is provided a base station for transmitting first data to plural mobile stations according to multicast or broadcast communications, including:
a replicating unit configured to replicate the first data to generate second data; and
a transmitting unit configured to transmit the first data and the second data for plural transmission time units.

In another aspect of the present invention, there is provided a mobile station for receiving first data transmitted from a base station according to multicast or broadcast communications, including:
a storage unit configured to store the first data and second data, the second data being replicated from the first data and transmitted for plural transmission time units; and
a combining unit configured to combine the stored first data and the stored second data for the plural transmission time units to generate the first data.

In another aspect of the present invention, there is provided a multicast/broadcast communication method between a base station for transmitting first data to plural mobile stations according to multicast or broadcast communications and a mobile station for receiving the first data, including the steps of:
replicating, by the base station, the first data to generate second data;
transmitting, by the base station, the first data and the second data for plural transmission time units;
storing, by the mobile station, the first data and the second data; and
combining, by the mobile station, the stored first data and the stored second data for the plural transmission time units to generate the first data.

### [ADVANTAGEOUS EFFECT OF THE INVENTION]

According to an embodiment of the present invention, it is possible to improve reception quality of multicast or broadcast communication data such as MBMS data without the need for feedback control.

### BRIEF DESCRIPTION OF THE DRAWINGS

Fig. 1 shows two types of MBMS network architectures.
Fig. 2 shows a conceptual diagram of an MBMS transmission method to which time diversity is applied in accordance with an embodiment of the present invention (an example where MBMS data are transmitted four times).
Fig. 3 shows a conceptual diagram of an MBMS transmission method to which time diversity is applied in accordance with an embodiment of the present invention (an example where MBMS data are transmitted twice).
Fig. 4 shows a conceptual diagram of transmission diversity and reception diversity.
Fig. 5 shows a conceptual diagram of a method of combining MBMS transmission signals in accordance with an embodiment of the present invention (an example where transmission diversity is used).
Fig. 6 shows a conceptual diagram of a method of combining MBMS transmission signals in accordance with an embodiment of the present invention (an example where reception diversity is used).
Fig. 7 shows a block diagram of a base station in accordance with an embodiment of the present invention (an example where the base station includes one transmission antenna).
Fig. 8 shows a block diagram of a base station in accordance with an embodiment of the present invention (an example where the base station includes two transmission antennas).
Fig. 9 shows a block diagram of a base station in accordance with an embodiment of the present invention (an example where the base station includes two transmission antennas).
Fig. 10 shows a block diagram of a mobile station in accordance with an embodiment of the present invention (an example where a base station includes one transmission antenna).
Fig. 11 shows a block diagram of a mobile station in accordance with an embodiment of the present invention (an example where a base station includes two transmission antennas).
Fig. 12 shows a block diagram of a mobile station in accordance with an embodiment of the present invention (an example where a base station includes two transmission antennas).
Fig. 13 shows a block diagram of a mobile station in accordance with an embodiment of the present invention (an example where the mobile station includes two reception antennas).
Fig. 14 shows a block diagram of a mobile station in accordance with an embodiment of the present invention (an example where the mobile station includes two reception antennas).
Fig. 15 shows a flowchart of an MBMS transmission method in accordance with an embodiment of the present invention.

### DETAINED DESCRIPTION OF THE PREFERRED EMBODIMENTS

### [DESCRIPTION OF NOTATIONS]

- 10: base station
- 101: MBMS information replicating unit
- 103: transmitting unit
- 105: CDD unit
- 20: mobile station
- 201: receiving unit
- 203: received signal storage unit
- 205: received signal combining unit
- 207: demodulating and decoding unit
- 209: CDD combining unit
- 211: CDD combined signal storage unit
- 213: CDD combined signal combining unit
- 217: antenna-to-antenna combining unit

### [BEST MODE OF CARRYING OUT THE INVENTION]

With reference to the accompanying drawings, a description is given below with regard to embodiments of the present invention.

In an embodiment of the present invention, a base station replicates MBMS data and transmits the replicated MBMS data together with the original MBMS data more than once at different timings. A mobile station receives data transmitted at different timings, combines the data, and decodes the original MBMS data. Transmitting MBMS data at different timings in this manner (time diversity) can achieve a diversity gain.

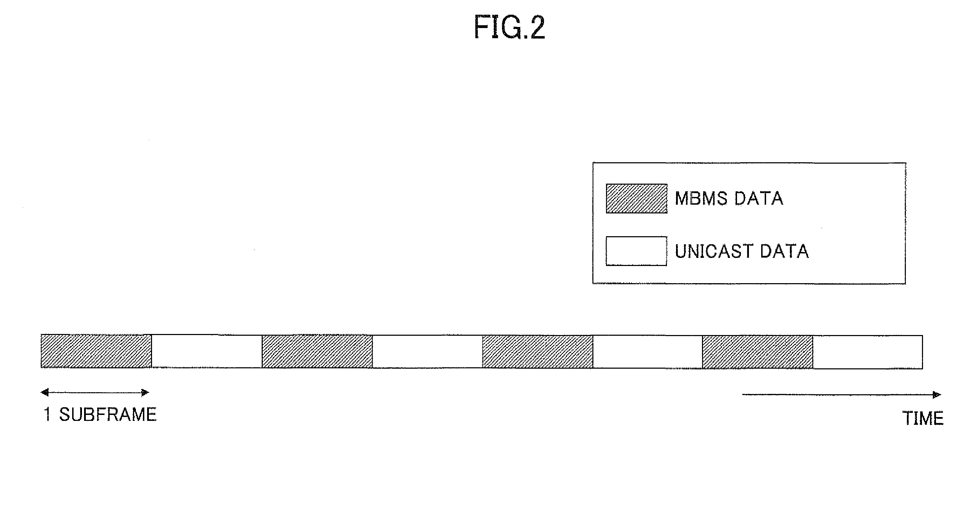

Fig. 2 shows a conceptual diagram of an MBMS transmission method to which time diversity is applied in accordance with an embodiment of the present invention. In the shown example, the base station transmits the same MBMS data for four subframes (transmission time units). From the viewpoint of a time diversity effect, it is desirable to transmit the same MBMS data at maximum time intervals therebetween, where possible, rather than to transmit the same MBMS data for continuous subframes. The transmission interval is determined based on allowable delay for an application. In other words, the replicated MBMS data have to be transmitted within the allowable delay. The number of transmissions is determined based on the determined transmission interval and the diversity effect. The transmission interval and the number of transmissions may be defined in advance in the system or may be reported from the base station to the mobile station on the broadcast channel.

The mobile station combines data transmitted for four subframes and decodes the original MBMS data. When a mobile station with better reception quality which is situated near the base station can decode the original MBMS data upon receiving data for one subframe, the mobile station need not deal with data for the remaining three subframes.

Data transmitted for plural subframes may be the same data, as described above. Alternatively, the data transmitted for plural subframes may be formed by applying different puncturing patterns to the same data. Transmitting the same data corresponds to increasing transmission power. In this case, received data can be combined in a similar manner to a Chase combining scheme, which is used for retransmission. On the other hand, transmitting data formed by applying different puncturing patterns to the same data corresponds to improving the coding rate. In this case, received data can be combined in a similar manner to an Incremental Redundancy scheme, which is used for retransmission.

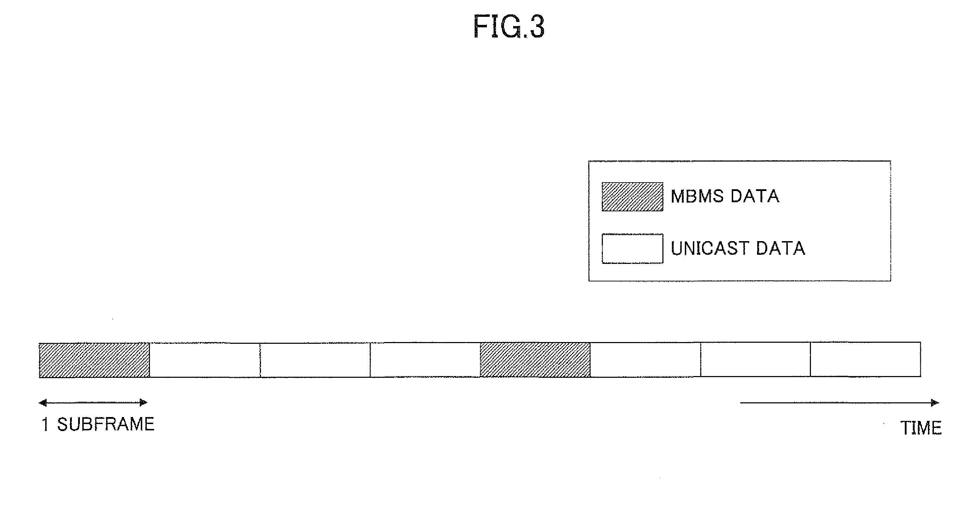

While the same MBMS data are transmitted for four subframes in Fig. 2, the same MBMS data may be transmitted for two subframes as shown in Fig. 3. As described above, the replicated MBMS data are transmitted at maximum time intervals therebetween, where possible, in order to achieve a time diversity effect.

### <MBMS transmission method to which transmission diversity and/or reception diversity are applied>

Next, an MBMS transmission method is described below where transmission diversity and/or reception diversity are used in addition to time diversity in accordance with an embodiment of the present invention.

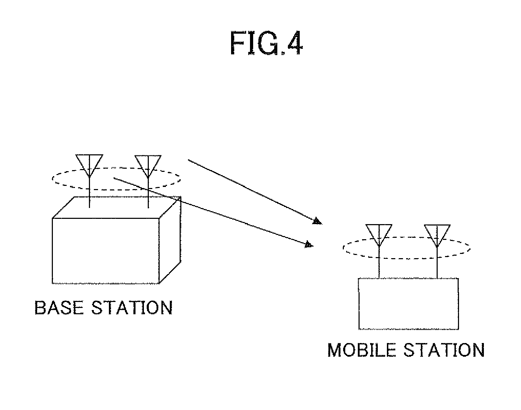

Fig. 4 shows a conceptual diagram of transmission diversity and reception diversity. For the transmission diversity, open-loop transmission diversity is described below, which does not need feedback information from the mobile station. The open-loop transmission diversity is a technology for using plural spatially-separated antennas and applying different operations to data for each antenna to transmit the data. For example, according to the open-loop transmission diversity, CDD (Cyclic Delay Diversity) may be used, where the timing of a transmission signal for an antenna 2 is delayed within a guard interval from the timing of a transmission signal for an antenna 1. The reception diversity is a technology for receiving signals by plural spatially-separated antennas to combine the signals.

Since open-loop transmission diversity and reception diversity do not need feedback information from the mobile station, they can be applied to the MBMS transmission method to which time diversity is applied in accordance with the embodiment of the present invention.

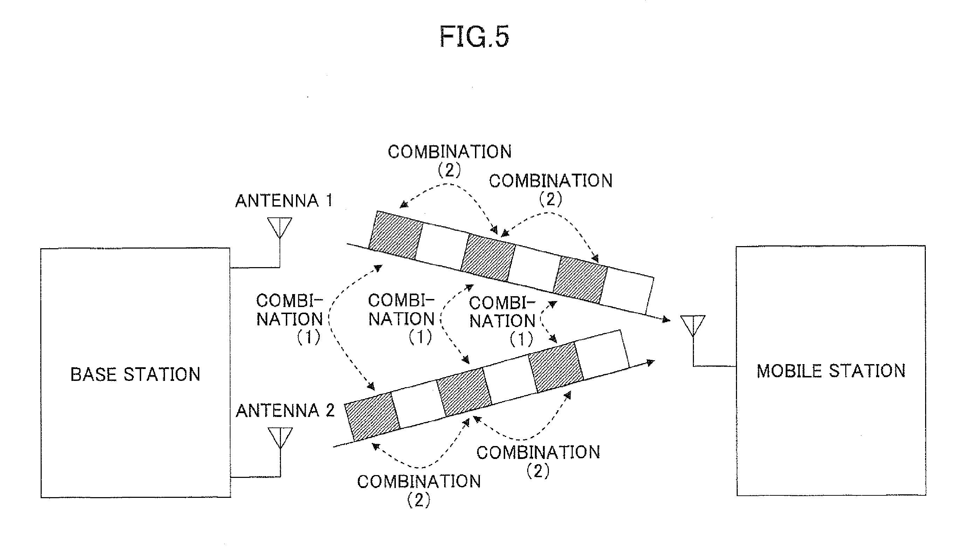

Fig. 5 shows a conceptual diagram of a method of combining signals when transmission diversity in the base station is used together with time diversity. When transmission diversity and time diversity are used, the base station replicates MBMS data to be transmitted and generates plural sets of MBMS data (or plural sets of MBMS data formed by applying different puncturing patterns to the same data). Then, the base station generates data for an antenna 1 and data for an antenna 2 from the plural sets of MBMS data, and transmits them from each antenna for plural subframes.

When the mobile station receives these data, the mobile station combines data transmitted from the antenna 1 of the base station and data transmitted from the antenna 2 of the base station for each subframe (combination (1)). Then, the mobile station combines data, which are combined among the antennas, for plural subframes (combination (2)). In this manner, the combination in terms of time diversity is performed after the combination in terms of transmission diversity. When a mobile station with better reception quality can decode MBMS data upon receiving data for one subframe, the mobile station need not deal with data for the remaining subframes.

Alternatively, the base station may generate data for the antenna 1 and data for the antenna 2 from MBMS data to be transmitted, replicate the data for each antenna, and then transmit plural sets of MBMS data for plural subframes.

When the mobile station receives these data, the mobile station combines data transmitted from each of the antennas 1 and 2 of the base station for plural subframes (combination (2)). Then, the mobile station combines data combined for the plural subframes for the antenna 1 and data combined for the plural subframes for the antenna 2 (combination (1)). In this manner, the combination in terms of transmission diversity may be performed after the combination in terms of time diversity.

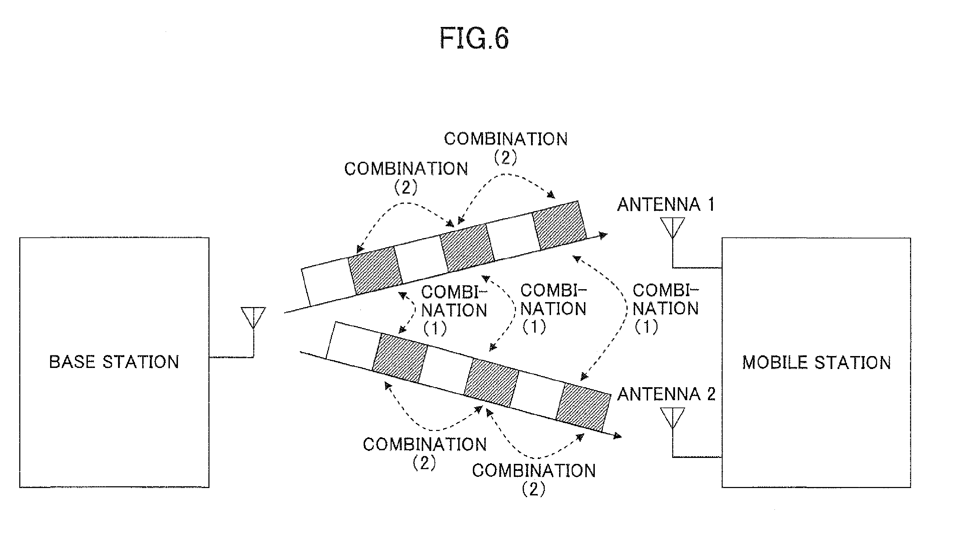

Fig. 6 shows a conceptual diagram of a method of combining signals when reception diversity in the mobile station is used together with time diversity. The base station replicates MBMS data to be transmitted and generates plural sets of MBMS data (or plural sets of MBMS data formed by applying different puncturing patterns to the same data). The base station transmits the plural sets of MBMS data for plural subframes.

When the mobile station receives these data, the mobile station combines data received by an antenna 1 of the mobile station and data received by an antenna 2 of the mobile station for each subframe (combination (1)). Then, the mobile station combines data, which are combined among the antennas, for plural subframes (combination (2)).
In this manner, the combination in terms of time diversity is performed after the combination in terms of reception diversity. When a mobile station with better reception quality can decode MBMS data upon receiving data for one subframe, the mobile station need not deal with data for the remaining subframes.

Alternatively, the mobile station may combine data received by each of the antennas 1 and 2 of the mobile station for plural subframes (combination (2)). Then, the mobile station combines data combined for the plural subframes for the antenna 1 and data combined for the plural subframes for the antenna 2 (combination (1)). In this manner, the combination in terms of reception diversity may be performed after the combination in terms of time diversity.

It should be noted that the methods described with references to Figs. 5 and 6 may be combined. In this manner, transmission diversity, reception diversity, and time diversity may be combined to improve reception quality.

### <Configuration of a base station>

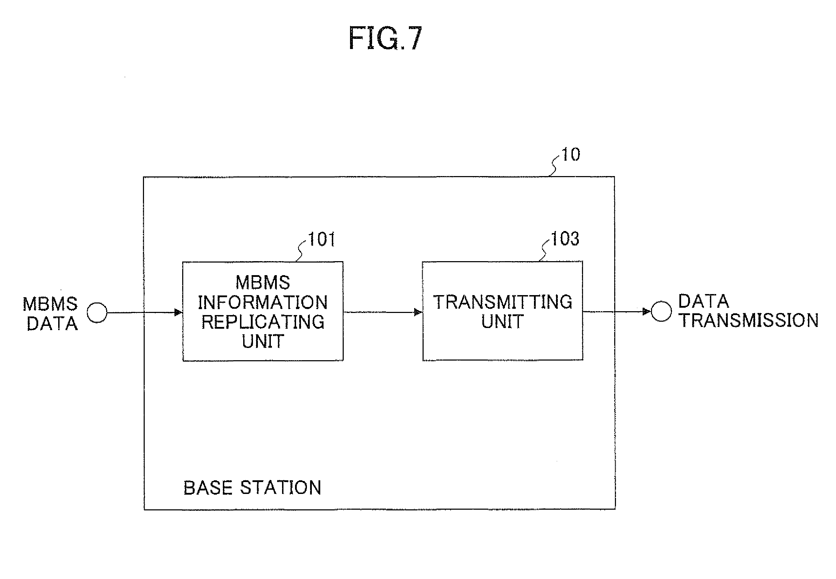

Fig. 7 shows a block diagram of a base station 10 in accordance with an embodiment of the present invention where the base station 10 includes one transmission antenna. The base station 10 includes an MBMS information replicating unit 101 and a transmitting unit 103.

The MBMS information replicating unit 101 replicates MBMS data to be transmitted and generates plural sets of MBMS data (or plural sets of MBMS data formed by applying different puncturing patterns to the same data). The transmitting unit 103 transmits the replicated MBMS data together with the original MBMS data at different timings. Specifically, the transmitting unit 103 transmits the plural sets of MBMS data for plural subframes.

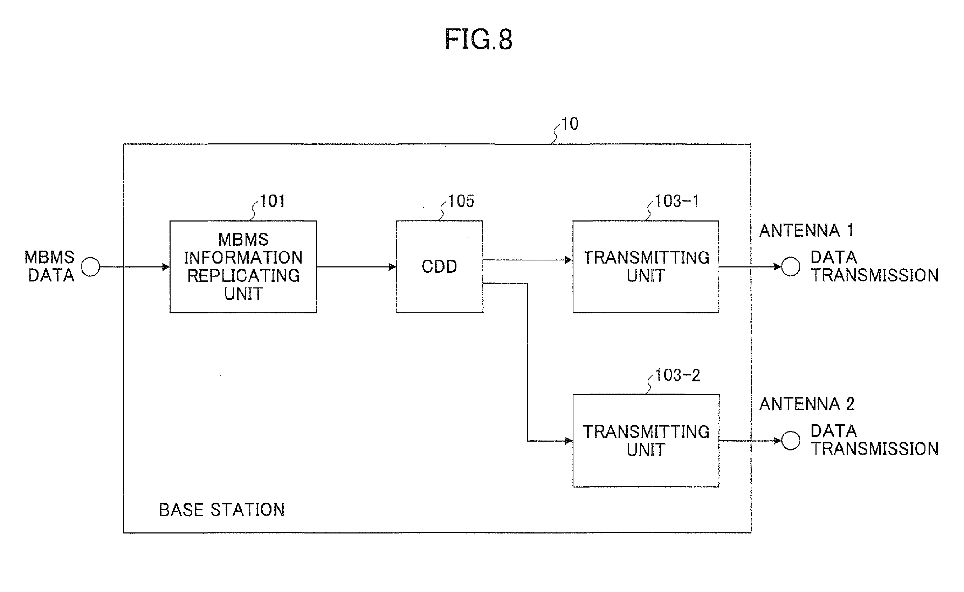

Fig. 8 shows a block diagram of a base station 10 in accordance with an embodiment of the present invention where the base station 10 includes two transmission antennas. The base station 10 includes an MBMS information replicating unit 101, transmitting units 103-1 and 103-2, and a CDD unit 105.

The MBMS information replicating unit 101 performs the same functionalities as described above. The CDD unit 105 generates data for an antenna 1 and data for an antenna 2 from the original MBMS data and the replicated MBMS data. For example, the CDD unit 105 applies to the data for the antenna 1 a phase rotation for the data for the antenna 2 and delays the timing of the data for the antenna 2 within a guard interval. Each of the transmitting units 103-1 and 103-2 transmits the data for the corresponding antenna for plural subframes. It should be noted that the base station 10 shown in Fig. 8 corresponds to the case where the mobile station performs the combination in terms of time diversity after the combination in terms of transmission diversity.

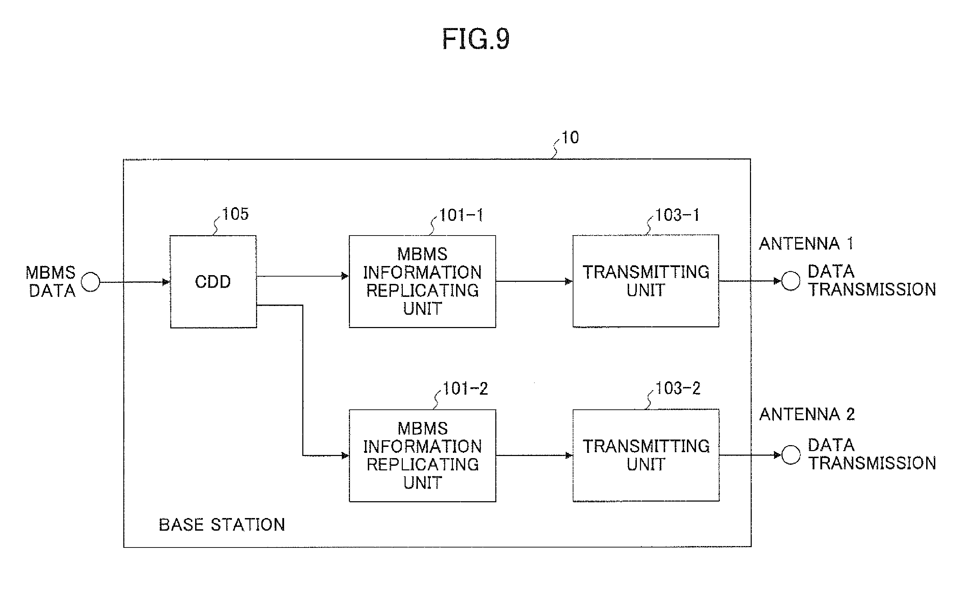

Fig. 9 shows a block diagram of a base station 10 in accordance with an embodiment of the present invention where the base station 10 includes two transmission antennas. The base station 10 includes MBMS information replicating units 101-1 and 101-2, transmitting units 103-1 and 103-2, and a CDD unit 105.

The CDD unit 105 generates data for an antenna 1 and data for an antenna 2 from MBMS data to be transmitted. Each of the MBMS information replicating units 101-1 and 101-2 replicates the data for the corresponding antenna and generates plural sets of MBMS data (or plural sets of MBMS data formed by applying different puncturing patterns to the same data) for the corresponding antenna. Each of the transmitting units 103-1 and 103-2 transmits the plural sets of MBMS data, which are generated for the corresponding antenna, for plural subframes. It should be noted that the base station 10 shown in Fig. 9 corresponds to the case where the mobile station performs the combination in terms of transmission diversity after the combination in terms of time diversity.

### <Configuration of a mobile station>

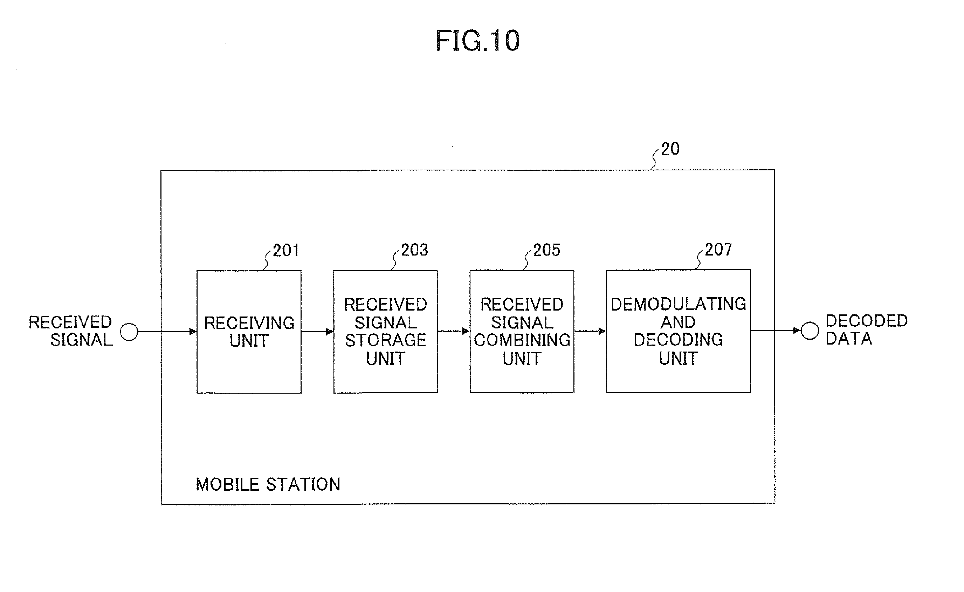

Fig. 10 shows a block diagram of a mobile station 20 in accordance with an embodiment of the present invention where a base station 10 includes one transmission antenna. The mobile station 20 includes a receiving unit 201, a received signal storage unit 203, a received signal combining unit 205, and a demodulating and decoding unit 207.

As described above, MBMS data are replicated and plural sets of MBMS data (or plural sets of MBMS data formed by applying different puncturing patterns to the same data) are transmitted from the base station 10 to the mobile station 20 for plural subframes. The receiving unit 201 receives data transmitted from the base station 10. The received data are stored in the received data storage unit 203. The received signal combining unit 205 combines data for plural subframes. When reception quality is better, all the data for plural subframes may not be combined. The demodulating and decoding unit 207 demodulates and decodes the combined data and generates desired MBMS data.

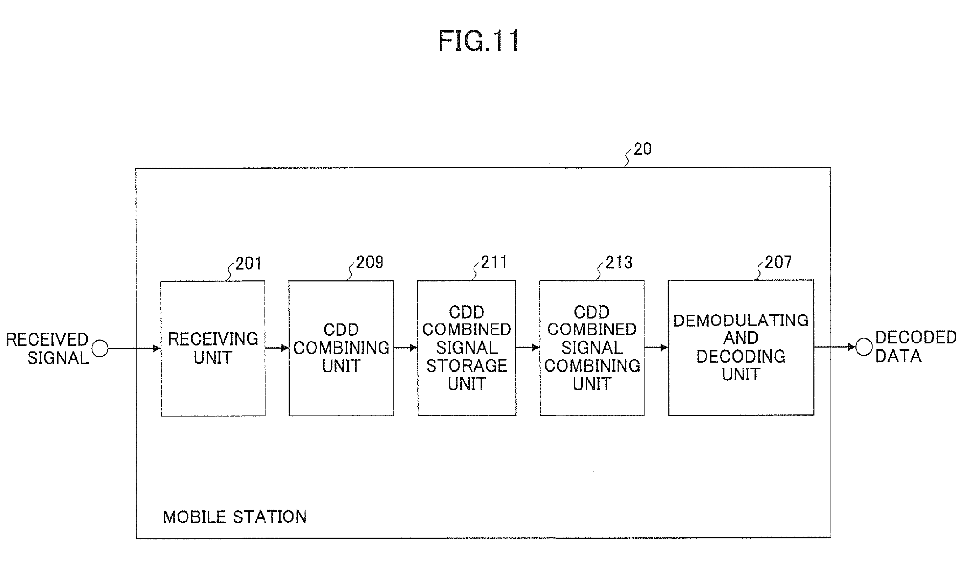

Fig. 11 shows a block diagram of a mobile station 20 in accordance with an embodiment of the present invention where a base station 10 includes two transmission antennas. The mobile station 20 includes a receiving unit 201, a CDD combining unit 209, a CDD combined signal storage unit 211, a CDD combined signal combining unit 213, and a demodulating and decoding unit 207.

The receiving unit 201 receives data transmitted from the base station 10. The CDD combining unit 209 combines data transmitted from an antenna 1 of the base station 10 and data transmitted from an antenna 2 of the base station 10. The combined data are stored in the CDD combined signal storage unit 211. The CDD combined signal combining unit 213 combines data for plural subframes. When reception quality is better, all the data for plural subframes may not be combined. The demodulating and decoding unit 207 demodulates and decodes the combined data and generates desired MBMS data. It should be noted that the mobile station 20 shown in Fig. 11 corresponds to the case where the mobile station 20 performs the combination in terms of time diversity after the combination in terms of transmission diversity.

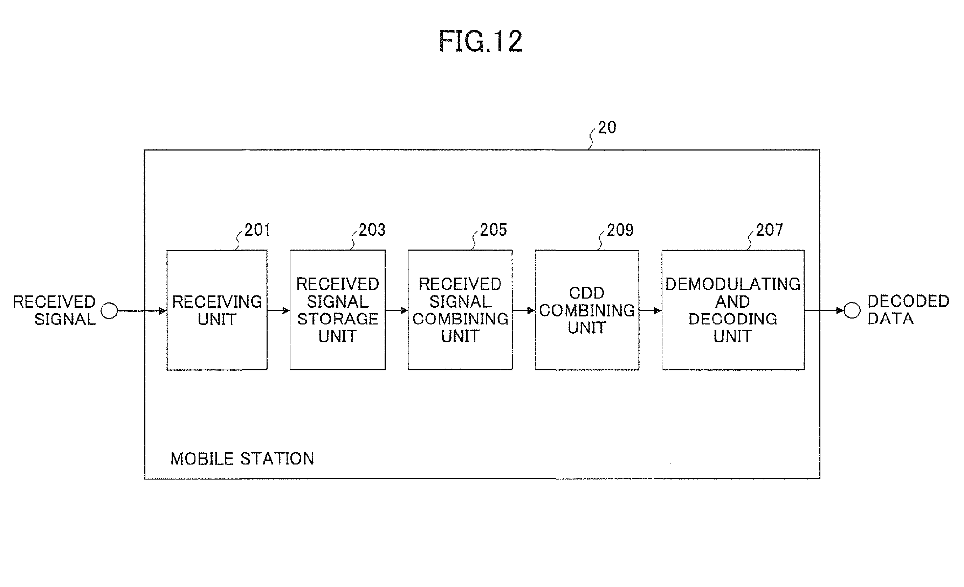

Fig. 12 shows a block diagram of a mobile station 20 in accordance with an embodiment of the present invention where a base station 10 includes two transmission antennas. The mobile station 20 includes a receiving unit 201, a received signal storage unit 203, a received signal combining unit 205, a CDD combining unit 209, and a demodulating and decoding unit 207.

The receiving unit 201 receives data transmitted from the base station 10. The received data are stored in the received data storage unit 203. The received signal combining unit 205 combines data for plural subframes. The CDD combining unit 209 combines data transmitted from an antenna 1 of the base station 10 and data transmitted from an antenna 2 of the base station 10. The demodulating and decoding unit 207 demodulates and decodes the combined data and generates desired MBMS data. It should be noted that the mobile station 20 shown in Fig. 12 corresponds to the case where the mobile station 20 performs the combination in terms of transmission diversity after the combination in terms of time diversity.

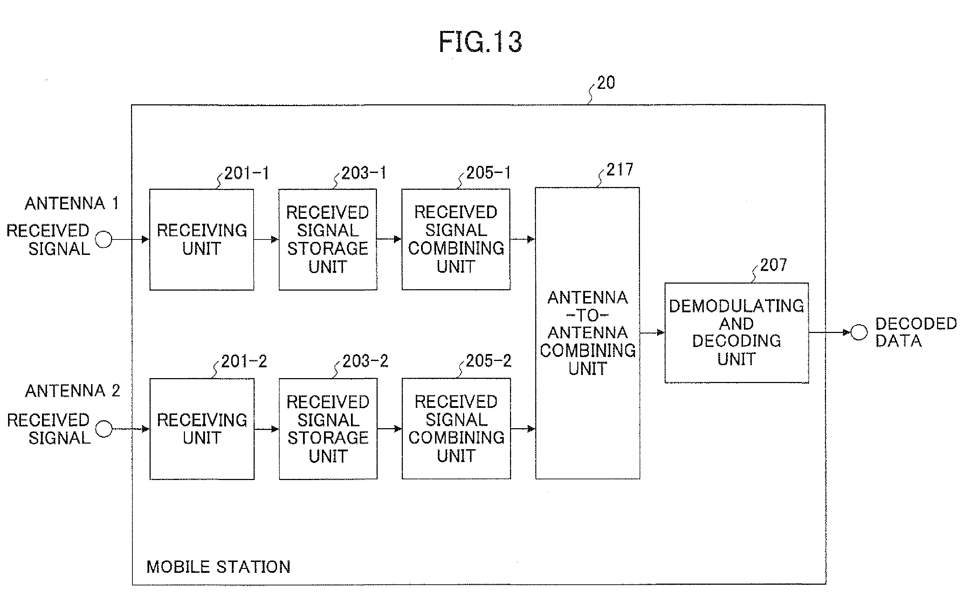

Fig. 13 shows a block diagram of a mobile station 20 in accordance with an embodiment of the present invention where the mobile station 20 includes two reception antennas. The mobile station 20 includes receiving units 201-1 and 201-2, received signal storage units 203-1 and 203-2, received signal combining units 205-1 and 205-2, an antenna-to-antenna combining unit 217, and a demodulating and decoding unit 207.

Each of the receiving units 201-1 and 201-2 receives, by the corresponding antenna, data transmitted from the base station 10. The received data are stored in each of the received data storage units 203-1 and 203-2 for each antenna. Each of the received signal combining units 205-1 and 205-2 combines data for plural subframes. The antenna-to-antenna combining unit 217 combines the combined data for the antenna 1 and the combined data for the antenna 2. The demodulating and decoding unit 207 demodulates and decodes the combined data and generates desired MBMS data. It should be noted that the mobile station 20 shown in Fig. 13 corresponds to the case where the mobile station 20 performs the combination in terms of reception diversity after the combination in terms of time diversity.

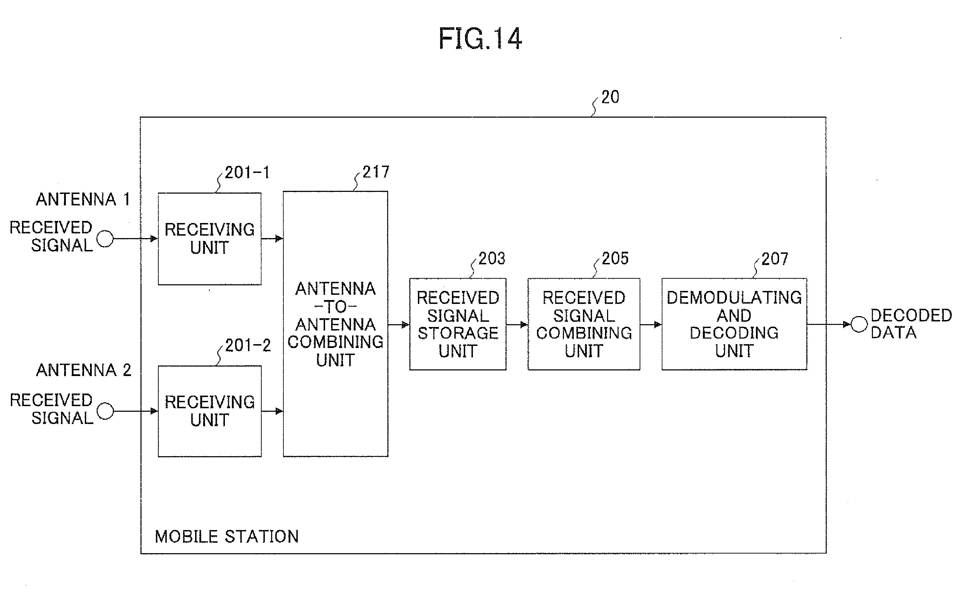

Fig. 14 shows a block diagram of a mobile station 20 in accordance with an embodiment of the present invention where the mobile station 20 includes two reception antennas. The mobile station 20 includes receiving units 201-1 and 201-2, an antenna-to-antenna combining unit 217, a received signal storage unit 203, a received signal combining unit 205, and a demodulating and decoding unit 207.

Each of the receiving units 201-1 and 201-2 receives, by the corresponding antenna, data transmitted from the base station 10. The antenna-to-antenna combining unit 217 combines the received data for the antenna 1 and the received data for the antenna 2. The received data are stored in the received data storage unit 203. The received signal combining units 205 combines data for plural subframes. When reception quality is better, all the data for plural subframes may not be combined. The demodulating and decoding unit 207 demodulates and decodes the combined data and generates desired MBMS data. It should be noted that the mobile station 20 shown in Fig. 14 corresponds to the case where the mobile station 20 performs the combination in terms of time diversity after the combination in terms of reception diversity.

### <Flowchart of a multicast or broadcast communication method>

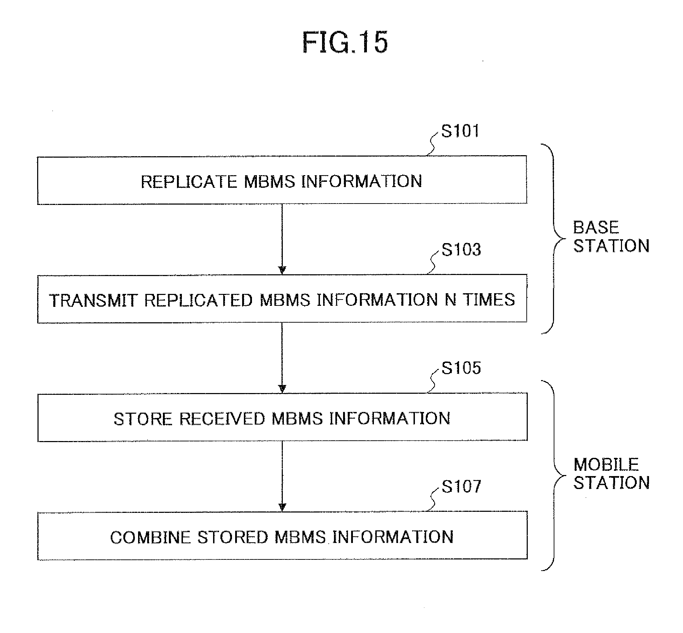

Fig. 15 shows a flowchart of an MBMS transmission method in accordance with an embodiment of the present invention.

First, the base station replicates MBMS data to be transmitted and generates plural sets of MBMS data (or plural sets of MBMS data formed by applying different puncturing patterns to the same data) (S101). Then, the base station transmits the replicated MBMS data together with the original MBMS data for plural subrames (S103). As described above, the base station may transmit the data according to transmission diversity. Specifically, the base station may generate data for an antenna 1 and data for an antenna 2 from the plural sets of MBMS data, and transmit them from the respective antennas for plural subframes.

The mobile station receives MBMS data transmitted for plural subframes and stores them (S105). Then, the mobile station combines the stored data for plural subframes and obtains desired MBMS data (S107). As described above, the mobile station may combine signals which are transmitted from plural antennas of the base station according to transmission diversity. Specifically, the mobile station may perform the combination in terms of time diversity after the combination in terms of the transmission diversity, or may perform the combination in terms of transmission diversity after the combination in terms of the time diversity. In addition, the mobile station may combine signals according to reception diversity. Specifically, the mobile station may perform the combination in terms of time diversity after the combination in terms of the reception diversity, or may perform the combination in terms of reception diversity after the combination in terms of the time diversity.

As described above, according to the embodiments of the present invention, it is possible to improve reception quality of multicast or broadcast communication data such as MBMS data without the need for feedback control.

The present invention is not limited to the above-described embodiments, but may be changed or modified within the scope of the claims. A base station, a mobile station, and a multicast/broadcast communication method in accordance with an embodiment of the present invention are applicable to both the MBSFN network architecture shown in Fig. 1(A) and the single-cell MBMS architecture shown in Fig. 1(B). Furthermore, the present invention is not limited to MBMS, but is applicable to any multicast or broadcast communications.

This international patent application is based on Japanese Priority Application No. 2008-051088 filed on February 29, 2008, the entire contents of which are incorporated herein by reference.

## Claims

1. A base station for transmitting first data to plural mobile stations according to multicast or broadcast communications, comprising:
a replicating unit configured to replicate the first data to generate second data; and
a transmitting unit configured to transmit the first data and the second data for plural transmission time units.

2. The base station as claimed in Claim 1, wherein:
when the base station includes plural antennas,
the replicating unit separates the first data and the second data into the respective antennas, and
the transmitting unit transmits the first data and the second data, which are separated into the respective antennas, for the plural transmission time units.

3. The base station as claimed in Claim 1, wherein:
when the base station includes plural antennas,
the replicating unit separates the first data into the respective antennas, replicates the first data which are separated into the respective antennas, and generates the second data for each of the antennas, and
the transmitting unit transmits the first data and the second data, which are generated for each of the antennas, for the plural transmission time units.

4. The base station as claimed in Claim 1, wherein:
the replicating unit determines the number of replications based on acceptable delay for the first data.

5. A mobile station for receiving first data transmitted from a base station according to multicast or broadcast communications, comprising:
a storage unit configured to store the first data and second data, the second data being replicated from the first data and transmitted for plural transmission time units; and
a combining unit configured to combine the stored first data and the stored second data for the plural transmission time units to generate the first data.

6. The mobile station as claimed in Claim 5, wherein:
when the mobile station includes plural antennas,
the storage unit stores the first data and the second data which are received by the respective antennas, and
the combining unit combines the stored first data and the stored second data for each of the antennas for the plural transmission time units, and
the mobile station further comprises
an antenna-to-antenna combining unit configured to combine, among the plural antennas, the first data and the second data which are combined for each of the antennas.

7. The mobile station as claimed in Claim 5, wherein:
when the mobile station includes plural antennas,
the mobile station further comprises
an antenna-to-antenna combining unit configured to combine, among the plural antennas, the first data and the second data which are received by the respective antennas,
the storage unit stores the first data and the second data which are combined among the plural antennas, and
the combining unit combines the stored first data and the stored second data for the plural transmission time unites.

8. A multicast/broadcast communication method between a base station for transmitting first data to plural mobile stations according to multicast or broadcast communications and a mobile station for receiving the first data, comprising the steps of:
replicating, by the base station, the first data to generate second data;
transmitting, by the base station, the first data and the second data for plural transmission time units;
storing, by the mobile station, the first data and the second data; and
combining, by the mobile station, the stored first data and the stored second data for the plural transmission time units to generate the first data.
